Europäisches Patentamt

European Patent Office

Office européen des brevets

(11) Numéro de publication: **0 202 722 B1**

# FASCICULE DE BREVET EUROPEEN

(45) Date de publication de fascicule du brevet:
**27.11.91**

(51) Int. Cl.⁵: **G01F 15/07, G01F 15/06**

(21) Numéro de dépôt: **86200899.2**

(22) Date de dépôt: **23.05.86**

(54) **Compteur totalisateur.**

(30) Priorité: **24.05.85 BE 48093**

(43) Date de publication de la demande:
**26.11.86 Bulletin 86/48**

(45) Mention de la délivrance du brevet:
**27.11.91 Bulletin 91/48**

(84) Etats contractants désignés:
**AT CH DE FR GB IT LI LU NL SE**

(56) Documents cités:
FR-A- 2 156 416          GB-A- 1 011 992
GB-A- 1 146 209          US-A- 3 006 712
US-A- 3 474 434          US-A- 3 732 404
US-A- 3 806 904

(73) Titulaire: **S.A. AQUACOM
rue de Magnée 110
B-4610 Beyne-Heusay(BE)**

(72) Inventeur: **Lenfant, Theo
rue Rotenberg 55
B-4700 Eupen(BE)**

(74) Mandataire: **Dellicour, Paul
Office de Brevets E. Dellicour rue Fabry
18/012
B-4000 Liège(BE)**

## Description

La présente invention est relative aux compteurs totalisateurs et est applicable à tout genre de fluides tels que eau, gaz, mazout ou électricité. Elle concerne des compteurs totalisateurs du type dit à aiguilles, où la démultiplication est réalisée par des roues dentées, par comparaison aux compteurs totalisateurs à rouleaux.

On connaît par le brevet US-A-3 732 404 un compteur, dans lequel des moyens sont utilisés pour convertir un mouvement de rotation continu en un mouvement de rotation différentiel intermittent, avec des contacts sur deux pistes et un contact par chiffre et un wiper système.

Ce compteur connu travaille par à-coups alors que, par rapport à de tels systèmes à chocs, dans le compteur suivant l'invention objet de la revendication la commutation des roues dentées se fait de manière douce, nécessitant très peu d'énergie et étant donc utilisable sur un grand nombre de types de compteurs tout en conservant leur sensibilité.

Dans le compteur totalisateur suivant l'invention objet de la revendication la multiplication est réalisée par des roues dentées entraînant des roues codeuses, qui commutent des plots de telle manière qu'à tout moment au moins un plot est commuté.

Une telle réalisation est connue par le brevet FR-A-2 156 416, qui décrit un appareil analysant grâce à ses six balais par tambour trente positions angulaires mais dans lequel le frottement est assez conséquent du fait de ses six balais.

Dans le brevet GB-A-1 011 992 aussi à tout moment un plot est commuté mais ici il s'agit d'un appareillage avec un "wiper" et un grand nombre de contacts, d'où un freinage conséquent.

Suivant l'invention, conformément à la revendication, le compteur totalisateur est caractérise en ce que chaque roue codeuse porte une plaque pourvue de quatre frotteurs en ligne sur un même rayon, les plots de contacts répartis sur la circonférence d'une platine de décodage étant conformés pour s'imbriquer l'un dans l'autre.

L'invention est décrite maintenant avec plus de détails sur la base des dessins annexés, uniquement à titre d'exemples, montrant en :

Figure 1 le principe de réduction par roues dentées commandant les roues codeuses pour un compteur totalisateur suivant l'invention ;

Figure 2 une coupe transversale dans la tête d'un compteur totalisateur suivant l'invention ;

Figure 3 une variante dans la coupe transversale suivant la figure 2 ;

Figure 4 une réalisation des contacts de codage montrant la disposition des plots et la roue codeuse ;

Figure 5, à plus grande échelle, diverses positions de codage suivant la figure 4 .

Le principe de réduction applicable à un compteurs totalisateur suivant l'invention montre en ligne le mobile central 2, le mobile 3 des litres, les mobiles 4 de réduction, les mobiles 5 supports de roue codeuse, l'étoile 6 et les roues codeuses 7.

Le système utilise la démultiplication mécanique par roues dentées normales, qui permet d'avoir un plus grand couple et une pression de contact suffisante pour garantir un contact fiable pendant des années.

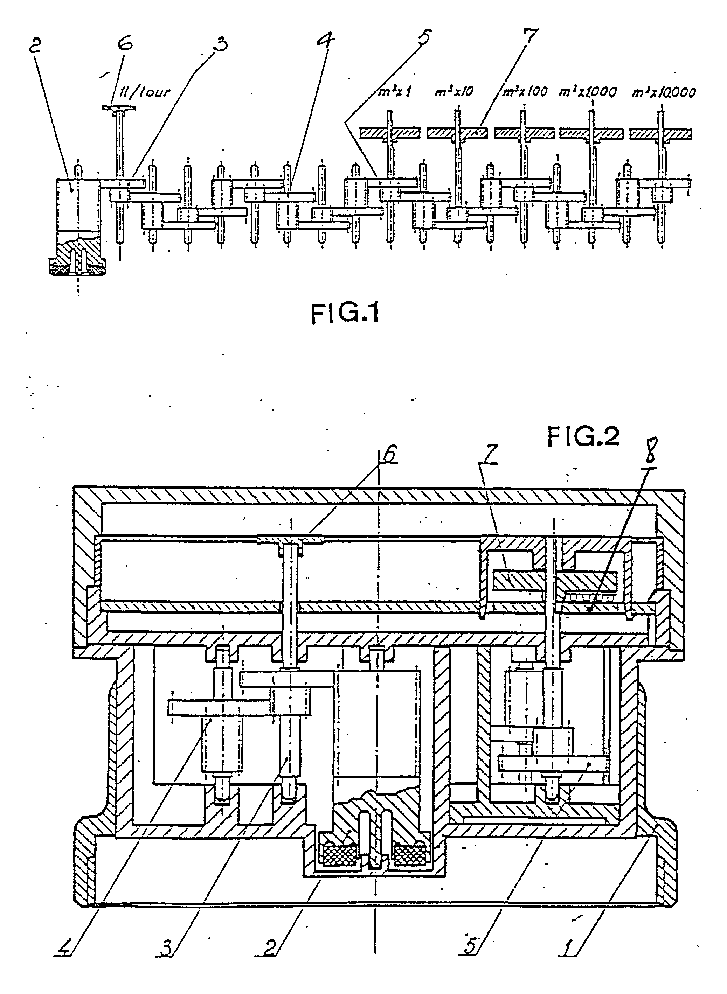

Ce principe de réduction est appliqué dans la figure 2 à un totalisateur monté dans la tête 1 d'un compteur. On y retrouve le mobile central 2, le mobile 3 des litres, un mobile 4 de réduction, un mobile 5 support de roue codeuse, l'étoile 6, une roue codeuse 7 et une platine 8 de décodage.

La lecture peut se faire soit avec des aiguilles pointant des chiffres, soit en utilisant le défilement de disques devant des index.

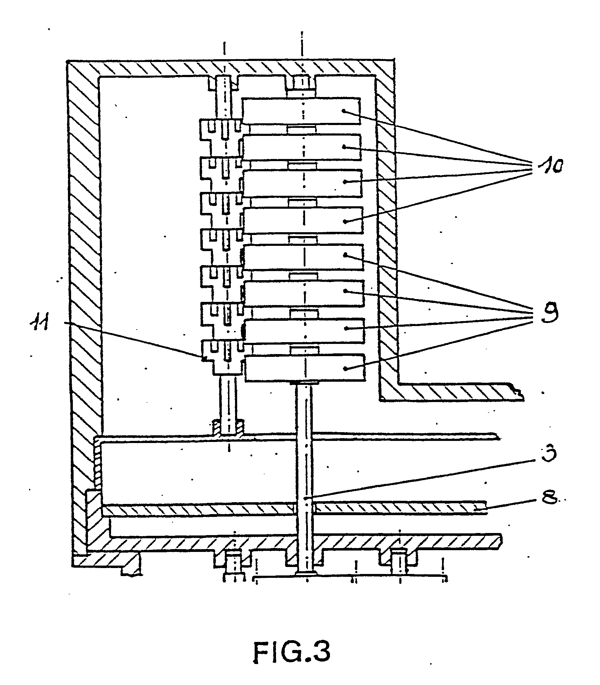

La lecture traditionnelle optique du compteur totalisateur peut, bien entendu, toujours se faire sur les aiguilles comme en option sur un totalisateur à tambours-sauteurs commandés par le mobile 3. Celui-ci commande (figure 3) les tambours 9 (en dessous du m3) et 10 (au-dessus du m3) avec pignons sauteurs 11.

Les roues codeuses 7 en tournant sous l'action des mobiles 5 commutent des plots 12, chaque roue commutant dix plots. La position de la roue est transférée par la platine de décodage vers une électronique entièrement digitale qui par multiplexage va sortir sériellement la position de toutes les roues, y compris par exemple le numéro du compteur.

La commutation des plots 12 par sa roue codeuse s'opère de telle façon que la position de la roue peut être déterminée aisément. A tout moment, il y a au moins un plot 12 qui est commuté. plot 12 qui est commuté.

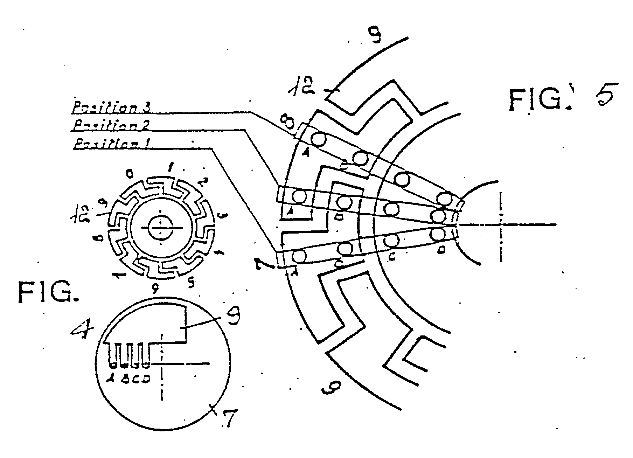

Comme on le voit en figure 4 la roue codeuse 7 porte une plaque 9 pourvue de quatre frotteurs A,B,C,D disposés en ligne sur un rayon, tandis que les plots (n° 1 à n° 10) sont conformés de manière irrégulière pour s'imbriquer les uns dans les autres. En position 1 comme en position 3 il y un plot commuté, n° 7 et puis n° 8, tandis que dans une position intermédiaire 2 il y a deux plots commutés, n° 7 et n° 8. L'interprétation du résultat par l'appareil de lecture permet d'afficher toujours le bon index.

Les états de ces contacts sont transmis à l'appareil de relevé d'index et de facturation pour y être analysés logiquement. La lecture de l'index partant de la roue codeuse avec contacts enclenchés ou déclenchés est donc un procédé essentiellement digital, contrairement aux systèmes courants.

La présente invention est applicable, comme il a été dit, à tout genre de fluides mais elle est aussi applicable à tout genre d'encodeur absolu fixant une valeur de référence dans l'univers espace-temps. On peut citer à titre d'exemples le calcul de la hauteur absolue par rapport au sol d'un flotteur, les compteurs kilométriques, les parcmètres, etc.

## Revendications

1. Compteur totalisateur du type dit à aiguilles, dans lequel la démultiplication mécanique est réalisée par des roues dentées (5) entraînant des roues codeuses (7), qui commutent des plots (12) de telle manière qu'à tout moment au moins un plot (12) est commuté, chaque roue codeuse (7) portant une plaque (9) pourvue de frotteurs (A- B- C- D) alignés sur un même rayon, les plots de contact (12) répartis à l'intérieur de la circonférence d'une platine de décodage (8) étant conformés pour s'imbriquer l'un dans l'autre, caractérisé en ce que
    a) ladite roue codeuse comprend quatre frotteurs,
    b) les plots de contact sont au nombre de dix, répartis autour de ladite circonférenoe,
    c) ils sont de forme identique et comportent chacun une première partie située à une distance du centre telle que le frotteur le plus éloigné du centre puisse le contacter, une seconde partie telle que le frotteur voisin puisse le contacter et une troisième partie joignant lesdites première et seconde parties,
    d) ils sont imbriqués de telle manière qu'à tout moment au plus deux plots (12) puissent être commutés, et
    e) les deux frotteurs les plus proches du centre contactent continuellement un contact continu concentrique situé à l'intérieur de ladite circonférence et sans contact avec les dix plots sur ladite circonférence.

## Claims

1. Integrating counter of the needle type whereby the mechanical reduction is achieved by toothed wheels (5) driving coding wheels (7) which are communting plugs (12) in such a way that at any time at least one plug is commuted, whereby each coding wheel (7) carries a plate (9) equipped with wipers (A - B - C - D) aligned on the same radius, whereby the contact plugs (12) distributed within the periphery of a decoding table (8) are shaped in order to engage in each other, characterized in that
    a) said coding wheel includes four wipers
    b) the number of contact plugs is equal to ten and they are distributed around said periphery
    c) they have an identical shape and include each a first part remotely located from the centre at such a distance that the wiper fastest remote from the centre can contact it, a second part such as the adjacent wiper can contact it and a third part connecting aforesaid first and second parts,
    d) they are mutually engaged in such a way that at any time at most two plugs (12) can be connected and
    c) the two wipers nearest to the centre are continuously contacting a concentrical continuous contact located within this periphery and without contact with the ten plugs on said periphery.

## Patentansprüche

1. Gesamtdurchflusszähler des Nadeltyps wobei die mechanische Untersetzung mit Codierräder (7) antreibenden Zahnräder (5) bewerkstelligt wird, welche Stöpsel (12) umschalten sodass zu jeder Zeit wenigstens ein Stöpsel (12) umgeschaltet wird, wobei jedes Codierrad (7) eine mit auf einem selben Radius ausgerichteten Kontaktschlitten (A - B - C - D) ausgerüstete Platte (9) trägt, wobei die innerhalb des Umfangs eines Decodiertisches (8) verteilte Kontaktstöpsel (12) gestaltet werden um ineinander geschoben zu werden, dadurch gekennzeichnet dass
    a) dieses Codierrad vier Kontaktschlitten umfasst
    b) die Kontaktstöpsel zehn sind und um diesem Kreisumfang verteilt werden
    c) sie diesselbe Gestaltung haben und einen ersten von der Mitte abgekehrten Teil umfassen sodass der am weitesten von der Mitte entfernte Kontaktschlitten mit ihm in Berührung kommen kann, einen zweiten Teil umfassen sodass der nächste Kontaktschlitten mit ihm in Berührung kommen kann und einen dritten diese sogenannte ersten und zweiten Teilen verbindenden Teil umfassen
    d) die auf solches Weise hineingeschoben sind dass zu jeder Zeit höchstens zwei Stöpsel (12) umgeschaltet werden können und
    e) die am wenigsten von der Mitte entfernte Kontaktschlitten stets in Berührung sind mit einem continuierlichen konzentrischen Kontaktstück welches innerhalb dieses Kreisumfanges und ohne Berührung mit den zehn Stöpsel auf diesen Kreisumfang steht.

FIG.1

FIG.2

FIG.3

FIG. 5

FIG. 4

Position 3
Position 2
Position 1